# EUROPÄISCHE PATENTSCHRIFT

(11) **EP 0 881 363 B1**
(45) Veröffentlichungstag und Bekanntmachung des Hinweises auf die Patenterteilung: **23.01.2002**
(21) Anmeldenummer: 98106397.7
(22) Anmeldetag: 08.04.1998
(51) Int. Cl.: F01L 1/34, F02D 13/02, F02D 33/02, F02D 41/14

(54) **Verfahren zur Steuerung einer verstellbaren Nockenspreizung bei einer Brennkraftmaschine in Kraftfahrzeugen**
Method of controlling the phase of the cams of an internal combustion engine of an automotive vehicle
Procédé de commande du déphasage des cames d'un moteur à combustion interne de véhicule automobile

(30) Priorität: 27.05.1997 DE 19722187
(43) Veröffentlichungstag der Anmeldung: 02.12.1998
(73) Patentinhaber: Bayerische Motoren Werke Aktiengesellschaft, 80788 München (DE)
(72) Erfinder: Rubbert, Stephan, 81777 München (DE)

(56) Entgegenhaltungen:
- EP-A- 0 643 201
- DE-A- 4 340 614
- US-A- 5 529 031

## Beschreibung

Die Erfindung betrifft ein Verfahren zur Steuerung einer verstellbaren Nokkenspreizung bei einer Brennkraftmaschine in Kraftfahrzeugen.

Ein derartiges Verfahren ist beispielsweise in Form einer drehzahlabhängigen Regelung einer stufenlos verstellbaren Nockenspreizung aus der DE 40 06 950 A1 bekannt. Auch wird zur Definition der Begriffe sowie zur grundsätzlichen Funktionsweise einer variablen Nockenspreizung (VANOS) beispielsweise auf die DE 40 06 950 A1 verwiesen. Insbesondere wird durch eine variable Nockenspreizung die Ventilüberschneidung, d. h. die Zeitspanne, während der die Einlaß- und die Auslaßventile gleichzeitig geöffnet sind, geändert. Die Zeitspanne der Ventilüberschneidung hat insbesondere Auswirkungen auf den Kraftstoffverbrauch und auf das Ausmaß der Abgasemissionen.

Der Soll-Wert der variablen Nockenspreizung (VANOS) wird üblicherweise aus einem Spreizungs-Kennfeld als digitales Signal ausgelesen. Die Differenz zwischen dem Ist-Wert und dem Soll-Wert der Nockenspreizung wird über einen D/A-Wandler in ein analoges Stellsignal umgeformt, das einer mechanischen Regelstrecke zur Einstellung des Soll-Werts der Spreizung zugeführt wird. Das Spreizungs-Kennfeld gibt den Soll-Wert der Nockenspreizung insbesondere in Abhängigkeit von der Brennkraftmaschinendrehzahl und der Last vor. Dabei wird dieses Spreizungs-Kennfeld üblicherweise auf die ungünstigsten Umgebungsbedingungen, z. B. den höchsten Umgebungsdruck oder das schlechteste Gemischverhältnis, ausgelegt. Dabei wird der Vorteil einer variablen Nockenspreizung aufgegeben, nämlich daß unter günstigeren Umgebungsbedingungen ein kleinerer Spreizwinkel bzw. eine längere Ventilüberschneidung mit entsprechenden Verbrauchs- und Emissionsvorteilen einstellbar wäre. Ein zu kleiner Spreizwinkel bzw. eine zu lange Ventilüberschneidung könnte jedoch zu einem unruhigen Brennkraftmaschinenlauf führen.

Allgemein sind bei einem unruhigen Brennkraftmaschinenlauf derzeit Laufruheregelungen bekannt, die jedoch nur durch einen Eingriff einer Zündwinkelregeleinrichtung oder einer Kraftstoffregeleinrichtung die Laufruhe der Brennkraftmaschine wiederherstellen.

Es ist Aufgabe der Erfindung, ein Verfahren eingangs genannter Art derart zu verbessern, daß der Kraftstoffverbrauch und die Abgasemissionen minimiert werden.

Diese Aufgabe wird durch die kennzeichnenden Merkmale des Patentanspruchs gelöst.

Erfindungsgemäß wird in einem ersten Schritt mittels eines elektronischen Steuergeräts, vorzugsweise eines ohnehin vorhandenen Motorsteuergeräts, aus einem Grundkennfeld eine minimale Nockenspreizung vorgesteuert. Dieses Grundkennfeld als Spreizungs-Kennfeld für die Vorgabe eines Soll-Wertes der Nockenspreizung wird insbesondere im Gegensatz zu dem bekannten Verfahren für die günstigsten Umgebungsbedingungen, z. B. für den niedrigstmöglichen Umgebungsdruck oder für einen Fahrzeugbetrieb in größeren Höhen, ausgelegt. Weiterhin ist erfindungsgemäß eine Laufruhenüberwachungseinheit vorgesehen. Derartige Laufruhenüberwachungseinheiten sind bekannt und überwachen die Laufruhe der Brennkraftmaschine entweder über die Auswertung von Drehzahlschwankungen oder Brennraumdruckschwankungen. In einem zweiten Schritt wird mittels einer Spreizungsverstelleinheit die eingestellte minimale Nockenspreizung vergrößert, wenn bei eingestellter minimaler Nockenspreizung die Brennkraftmaschine eine Laufruhengrenze überschreitet, d. h. wenn ein unruhiger Motorlauf festgestellt wird.

Der Erfindung liegt die Erkenntnis zugrunde, daß mit den Nockenwellen-Spreizwinkeln der Restgasanteil in einem Zylinder beeinflußt wird. Der Restgasanteil ändert sich jedoch zusätzlich mit Umgebungsbedingungen, wie z. B. dem Umgebungsdruck oder der Umgebungstemperatur. Um diesen Einfluß zu erfassen, wird erfindungsgemäß zunächst das Grundkennfeld für den Spreizwinkel bzw. für die Ventilüberschneidung für günstige Umgebungsbedingungen ausgelegt, so daß der Spreizwinkel kleiner als bei üblichen Verfahren vorgesteuert wird. Wird eine Laufunruhe festgestellt, die insbesondere durch instabile Verbrennung in einem Zylinder auftritt, wird erfindungsgemäß eine Laufruhenregelung über die Vergrößerung der Nockenspreizung vorgenommen. Vorzugsweise wird die Laufruhenregelung über die Vergrößerung der Nockenspreizung zusätzlich bei hohen Brennkraftmaschinendrehzahlen und klopfender Verbrennung im Vollastbetrieb vorgenommen, wodurch die Zylinderfüllung reduziert wird. Somit wird auch klopfende Verbrennung vermieden.

Mit der erfindungsgemäßen Laufruhenregelung können die Möglichkeiten der variablen Nockenspreizung besser ausgeschöpft werden, da grundsätzlich ein Brennkraftmaschinenbetrieb mit längerer Ventilüberschneidung erreichbar ist. Somit wird eine Verbrauchs- und Emissionsminimierung erreicht.

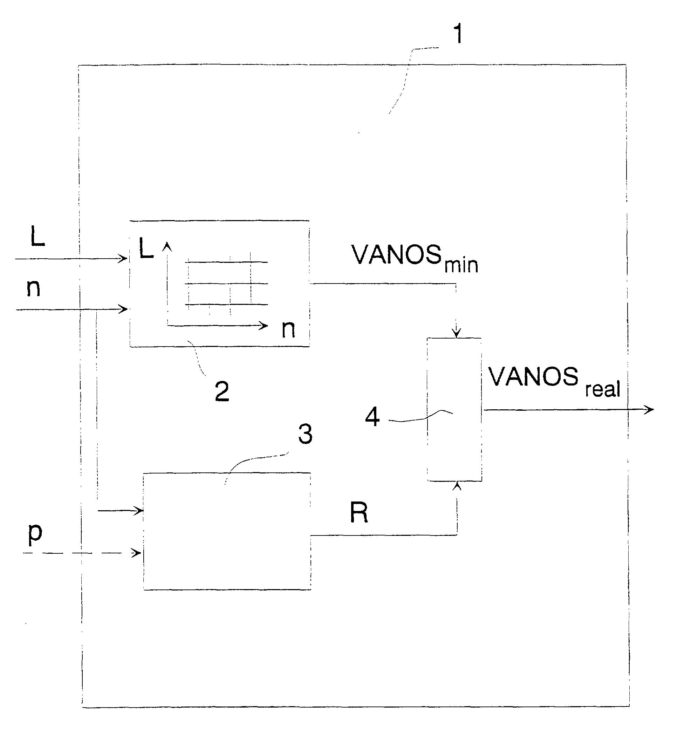

In der Zeichnung ist ein Ausführungsbeispiel der Erfindung dargestellt. Sie zeigt eine Vorrichtung zur Durchführung eines Verfahrens zur Laufruheregelung mittels einer verstellbaren Nockenspreizung.

Ein elektronisches Steuergerät 1 erhält ein die Last der Brennkraftmaschine wiedergebendes Signal L und die Brennkraftmaschinendrehzahl n als Eingangssignale. Zusätzlich kann das Steuergerät 1 auch Drucksignale p von Brennraumsensoren in den Zylindern als Eingangssignale erhalten. Ein Ausgangssignal des elektronischen Steuergeräts 1 ist das analoge Stellsignal VANOSᵣₑₐₗ, das zu einer tatsächlich eingestellten Nockenspreizung führt.

Das elektronische Steuergerät 1 enthält ein Grundkennfeld 2, durch das in Abhängigkeit vom dem Lastsignal L und der Brennkraftmaschinendrehzahl n eine minimale Nockenspreizung VANOSₘᵢₙ als Soll-Wert der Nockenspreizung vorgesteuert wird. Weiterhin ist im Steuergerät 1 eine Laufruhenüberwachungseinheit 3 integriert, durch die beispielsweise durch Auswertung von Schwankungen der Brennkraftmaschinendrehzahl n oder durch Auswertung von Schwankungen der Drucksignale p festgestellt wird, ob eine definierte Laufruhengrenze überschritten ist. Das Überschreiten einer Laufruhengrenze ist beispielsweise feststellbar, wenn die Schwankungen der Brennkraftmaschinendrehzahl n ein bestimmtes Ausmaß überschreiten, und somit eine unzulässige Laufunruhe der Brennkraftmaschine definiert ist.

Wird ein unruhiger Brennkraftmaschinenlauf festgestellt, da die Laufruhengrenze überschritten ist, wird an eine Spreizungsverstelleinheit 4 ein Steuersignal R zur Vergrößerung der Nockenspreizung übermittelt.

Grundsätzlich entspricht die eingestellte Nockenspreizung bzw. das Stellsignal VANOSᵣₑₐₗ der vorgesteuerten minimalen Nockenspreizung VANOSₘᵢₙ. Wird jedoch von der Laufruhenüberwachungseinheit 3 an die Spreizungsverstelleinheit 4 das Steuersignal R zur Vergrößerung der Nockenspreizung ausgegeben, ist die eingestellte Nockenspreizung VANOSᵣₑₐₗ größer als die vorgesteuerte minimale Nockenspreizung VANOSₘᵢₙ. Wird also ein unruhiger Brennkraftmaschinenlauf bzw. das Überschreiten der Laufruhegrenze festgestellt, findet eine Laufruhenregelung in Form einer Vergrößerung der Nokkenspreizung solange statt, bis die Laufruhengrenze wieder unterschritten ist. Andernfalls wird grundsätzlich eine minimal zulässige Nockenspreizung bzw. eine maximal zulässige Ventilüberschneidung eingestellt, wodurch der Kraftstoffverbrauch und die Abgasemissionen minimiert werden.

## Patentansprüche

1. Verfahren zur Steuerung einer verstellbaren Nockenspreizung bei einer Brennkraftmaschine in Kraftfahrzeugen, **dadurch gekennzeichnet, daß** mittels eines elektronischen Steuergeräts (1) aus einem Grundkennfeld (2) eine minimale Nockenspreizung (VANOSₘᵢₙ) vorgesteuert wird, daß eine Laufruhenüberwachungseinheit (3) feststellt, wenn bei eingestellter minimaler Nockenspreizung (VANOSₘᵢₙ=VANOSᵣₑₐₗ) die Brennkraftmaschine eine Laufruhengrenze überschreitet und daß eine Spreizungsverstelleinheit (4) die eingestellte Nockenspreizung (VANOSᵣₑₐₗ) vergrößert, solange die Laufruhengrenze überschritten ist.

## Claims

1. A method of control of adjustable camshaft phasing of an internal combustion engine in motor vehicles, **characterised in that** an electronic control device (1), using a basic performance graph (2), presets a minimum camshaft phasing (VANOSₘᵢₙ), a quiet-running monitoring unit (3) detects when the engine exceeds a quiet-running limit while the minimum camshaft phasing (VANOSₘᵢₙ=VANOSᵣₑₐₗ) is set, and a phasing adjusting unit (4) increases the set camshaft phasing (VANOSᵣₑₐₗ) as long as the quiet-running limit is exceeded.

## Revendications

1. Procédé de commande d'un déphasage réglable de cames d'un moteur à combustion interne d'un véhicule automobile,
**caractérisé en ce qu'**
à l'aide d'un appareil de commande électronique (1) à partir d'un champ de caractéristiques de base (2) on commande préalablement un déphasage minimum de cames (VANOSₘᵢₙ), une unité de surveillance de régularité de fonctionnement (3) détermine si pour un déphasage minimum de cames réglé (VANOSₘᵢₙ = VANOSᵣₑₐₗ) le moteur à combustion interne dépasse une limite de régularité de fonctionnement et une unité de réglage de déphasage (4) augmente le déphasage réglé des cames (VANOSᵣₑₐₗ) aussi longtemps que la limite de régularité de fonctionnement est dépassée.
